# EUROPÄISCHE PATENTSCHRIFT

(11) **EP 3 025 082 B1**
(45) Veröffentlichungstag und Bekanntmachung des Hinweises auf die Patenterteilung: **22.11.2017**
(21) Anmeldenummer: 14719696.8
(22) Anmeldetag: 17.04.2014
(51) Int. Cl.: F16L 11/127, F16L 53/00, H01B 3/28, B32B 15/08, B32B 25/08, B32B 25/16, B32B 27/36, B32B 1/08, F16L 11/08, H05B 3/00, B32B 25/10

(54) **BEHEIZBARER ARTIKEL, INSBESONDERE EIN BEHEIZBARER SCHLAUCH MIT EINEM KUNSTSTOFFUMMANTELTEN HEIZLEITER UND VERFAHREN ZU DESSEN HERSTELLUNG**
HEATABLE ARTICLE, IN PARTICULAR A HEATABLE HOSE HAVING A PLASTIC-SHEATHED HEATING ELEMENT, AND METHOD FOR THE PRODUCTION THEREOF
ARTICLE CHAUFFANT, EN PARTICULIER TUYAU CHAUFFANT MUNI D'UN CONDUCTEUR CHAUFFANT GAINÉ DE MATIÈRE PLASTIQUE, ET PROCÉDÉ DE FABRICATION DUDIT ARTICLE

(30) Priorität: 24.07.2013 DE 102013107917
(43) Veröffentlichungstag der Anmeldung: 01.06.2016
(73) Patentinhaber: ContiTech Schlauch GmbH, 30165 Hannover (DE)
(72) Erfinder: LANGE, Rainer, 35110 Frankenau (DE); TASSEKI, Metin, 34497 Korbach (DE)
(74) Vertreter: Preusser, Andrea
(86) Internationale Anmeldenummer: PCT/EP2014/057844
(87) Internationale Veröffentlichungsnummer: WO 2015/010800

(56) Entgegenhaltungen:
- EP-A1- 2 214 176
- DE-A1- 10 201 920
- "Feeling the heat: Solutions for wire and cable", www.dsm.com , 24. Januar 2012 (2012-01-24), XP002726685, Gefunden im Internet: URL:http://archive-com.com/page/507004/201 2-10-23/http://www.dsm.com/en_US/automotiv e/public/home/pages/wire_cable.jsp [gefunden am 2014-07-04]
- "Arnitel: Ideal for rubber replacement", www.dsm.com , 2. Januar 2012 (2012-01-02), XP002726686, Gefunden im Internet: URL:http://archive-com.com/page/507004/201 2-10-23/http://www.dsm.com/en_US/automotiv e/public/home/pages/arnitel.jsp [gefunden am 2014-07-04]

## Beschreibung

Die Erfindung betrifft einen beheizbaren Artikel mit einem elastischen Grundkörper aus einem Vulkanisat, wobei in den Grundkörper ein Heizleiter eingebettet ist, der mit einer elektrischen Anschlussvorrichtung elektrisch verbindbar ist sowie eine Seele als Heizdraht und eine Ummantelung aus einem elektrisch isolierenden polymeren Werkstoff umfasst. In den Artikel ist zumeist noch ein Festigkeitsträger, der ein- oder mehrlagig ausgebildet sein kann, eingebettet. Die Erfindung betrifft ferner ein Verfahren zur Herstellung eines derartigen beheizbaren Artikels.

Ein Artikel der oben genannten Art kommt insbesondere in Form eines beheizbaren Schlauches zur Anwendung. Zur Erwärmung eines im Schlauch fließenden Mediums ist dieser mit einem Heizleiter versehen, der sich über zumindest einen Teilbereich der Schlauchlänge erstreckt, und zwar insbesondere in Form eines wendelförmigen Verlaufes. Der Heizleiter umfasst eine metallische Seele und eine Ummantelung als Isolierschicht. Der Heizleiter ist dabei innerhalb der Außenschicht des Schlauches eingebettet, insbesondere unmittelbar oberhalb der geflechtsartigen Verstärkungsschicht. Wichtig ist, dass der Heizleiter im Bereich der elektrischen Anschlussvorrichtung ohne Schädigung seiner metallischen Seele und seiner Ummantelung freigelegt werden kann.

Wie bereits aus EP EP2214176A1 bekannt, werden für die Ummantelung des Heizleiters Polyphenylene eingesetzt, die elektrisch isolierende Eigenschaften aufweisen sowie unter Vulkanisationsbedingungen beständig sind.

Die Verwendung von Polyphenylenen hat sich allerdings als nachteilig gezeigt. Die Verwendung von reinem PPS ist viel zu hart, spröde und kostenintensiv. Dies bedingt u.a. Probleme hinsichtlich der Formbeständigkeit und der Verarbeitbarkeit.

Die Aufgabe der vorliegenden Erfindung besteht daher darin, für die Ummantelung des Heizleiters einen polymeren Werkstoff mit isolierenden Eigenschaften bereitzustellen, der zum Einen als Alternative zu Polyphenylen verwendet werden kann und sich zum Anderen durch eine verbesserte Formbeständigkeit und Verarbeitbarkeit auszeichnet.

Gleichzeitig sollen auch hierbei eine gute Wärmedruckbeständigkeit und somit eine geringe Abfallrate vorhanden sein.

Eine gute Wärmedruckbeständigkeit ist weiterhin notwendig, da die Dicke der Isolationsschicht beim Vulkanisationsprozess des Artikelrohlings durch Wärme und/oder Druck, insbesondere im Kontaktbereich von Isolation und der geflechtsartigen Verstärkungsschicht, örtlich stark reduziert oder auch zerstört wird. Es entstehen "Geflechtsabdrücke" in der Isolationsschicht. Insbesondere an diesen Stellen reißt die Isolation beim Herausziehen des Heizleiters aus der Vulkanisatschicht auf. Folge wiederum ist, dass häufig ein nicht unerheblicher Anteil des Artikels, insbesondere bei Schläuchen, dem Abfall zugeführt werden mussten.

Gelöst wird diese Aufgabe dadurch, dass die Ummantelung aus wenigstens einem getemperten thermoplastischen Elastomer besteht.

Gemäß Römpp-Chemielexikon Online, Version 3.33 sind thermoplastische Elastomere (TPE) "Polymere, auch thermoplastische Kautschuke genannt, die im Idealfall eine Kombination der Gebrauchseigenschaften von Elastomeren und den Verarbeitungseigenschaften von Thermoplasten besitzen. Das kann erreicht werden, wenn in den Makromolekülen der entsprechenden Kunststoffe gleichzeitig weiche und elastische Segmente mit hoher Dehnbarkeit und niedriger Glasübergangstemperatur (Tg) sowie harte, kristallisierbare Segmente mit geringer Dehnbarkeit, hoher Tg und Neigung zur Assoziatbildung (physikalische Vernetzung) vorliegen. Die Weich- und Hartsegmente müssen miteinander unverträglich sein und als individuelle Phasen vorliegen.

Kennzeichnend für thermoplastische Elastomere sind somit thermolabile, reversibel spaltbare Vernetzungsstellen meist physikalischer, aber auch chemischer Art [...]."

Erfindungsgemäß können alle der fachkundigen Person bekannten thermoplastischen Elastomere, wie TPA, TPC, TPO, TPS, TPU, TPV und TPZ, verwendet werden. Die Nomenklatur erfolgt hierbei gemäß ISO 18064:2003(E). Insbesondere die Verwendung von TPC, d.h. thermoplastischen Polyesterelastomeren (auch als thermoplastische Copolyester bezeichnet) mit Segmenten aus Ether und / oder Ester, hat sich als vorteilhaft erwiesen.

TPE-C zeigt insbesondere gegenüber den bekannten Polyphenylen eine bessere Formbeständigkeit aufgrund der vorhandenen Teilvernetzung von TPE-C. Das bisher verwendete reine oder verblendete Polyphenylen dagegen zeigt eine deutlich schlechtere Formbeständigkeit. Zudem ist auch die Dehnung von TPE-C deutlich günstiger für die Anwendung im Schlauch bzw. als Ummantelung eines Schlauchheizleiters. TPE-C besitzt eine Dehnung von ca. 450%, während Polyphenylen, insbesondere PPS, eine Dehung von lediglich 100% besitzt. Diese Eigenschaften des thermoplastischen Elastomers, bevorzugt des TPE-C, gewährleisten, daß die Heizleiter mit einer derartigen Ummantelung deutlich biegeweicher sind als jene mit bspw. PPS und dadurch mit weniger Kraft in kleineren Biegeradien verarbeitet werden können. Dies erleichtert die Verarbeitung in allen Verarbeitungsstufen und minimiert den Fehleranteil und Ausschuss.

Das TPC kann hierbei als TPS-EE mit weichen Segmenten aus Ether und Ester, als TPC-ES mit weichen Segmenten aus Polyester oder als TEC-ET mit weichen Segmenten aus Polyether vorliegen. Besonders zweckmäßig hat sich die Verwendung von TPC-ES erwiesen, welches beispielsweise unter dem Handelsnamen Arnitel® CM551 der Firma DSM Engineering Plastics erhältlich ist.

Die Ummantelung des Heizleiters besteht erfindungsgemäß vollständig aus wenigstens einem thermoplastischen Elastomer. Es ist somit auch möglich, dass Kombinationen von verschiedenen thermoplastischen Elastomeren eingesetzt werden können.

Die thermoplastischen Elastomere der oben genannten Art zeichnen sich durch eine gute Festigkeit aus. Um die eingangs erwähnte Aufgabenstellung vollständig lösen zu können, ist es erforderlich, dass thermoplastischen Elastomere zusätzlich getempert, d.h. über einen längeren Zeitraum erhitzt worden sind. Durch das Tempern wird der Heizleiter steifer, da die Wickelspannung zunimmt.

Eine weitere Aufgabe der Erfindung besteht darin, ein Verfahren zur Herstellung eines beheizbaren Artikels bereitzustellen, bei dem die Ummantelung des Heizleiters weiterhin wärmedruckbeständig ist, verbunden mit einer deutlichen Reduzierung der Abfallrate, und die sich aber gleichzeitig durch eine erhöhte Produktsicherheit auszeichnet.

Gelöst wird diese Aufgabe durch wenigstens folgende Verfahrensschritte:
- die Ummantelung des Heizleiters, die aus wenigstens einem thermoplastischen Elastomer besteht, wird getempert;
- der getemperte Heizleiter wird in eine den Grundkörper bildende vulkanisierbare Polymermischung eingebettet, und zwar unter Ausbildung eines Artikelrohlings;
- schließlich wird der Artikelrohling vulkanisiert.

Der Temperprozess des kunststoffummantelten Heizleiters ist hierbei wesentlich, da sich nur dann die gewünschten bzw. notwendigen Materialeigenschaften ergeben.

Tempern bedeutet zunächst im allgemeinen Sinne das Erhitzen eines Stoffes bzw. eines Gegenstandes über einen längeren Zeitraum hinweg. Dadurch können Spannungen im Kristallgefüge und Risse, wie sie bei Heißverformung und anschließendem raschen Abkühlen entstehen, beseitigt werden, wodurch letztlich Stabilität bzw. eine Verbesserung der Produktqualität erreicht wird. Die Tempertemperatur liegt häufig in der Nähe, aber natürlich unterhalb des Schmelzpunktes. Bei Kunststoffen geschieht dies durch Warmlagern, um bessere Wärmebeständigkeit zu erzielen, innere Spannungen abzubauen und eine Nachschwindung vorwegzunehmen. Die Wärmebehandlung erfolgt materialabhängig bei Temperaturen unterhalb des Erweichungsbereiches bzw. kristallinen Schmelzbereiches. Während der Wärmelagerungsdauer ist auf eine möglichst konstante Temperatur und eine gute Luftzirkulation innerhalb des Umluftofens zu achten. Um einen Wärmestau zu vermeiden, sollten ferner die Teile nicht aufeinander gestapelt werden.

Die Heizleiter, umfassend eine Seele als Heizdraht und eine Ummantelung aus einem elektrisch isolierenden polymeren Werkstoff, werden auf Spulen vom Hersteller derartiger Heizleiter auf Spulen angeliefert und vor Einbau in den beheizbaren Artikel einem Temperprozess im Trockenofen unterworfen. Die Behandlungstemperatur und Behandlungszeit sind auf das zu tempernde thermoplastische Elastomer abzustimmen. Bei Einsatz eines thermoplastischen Elastomers als Ummantelung, insbesondere bei Verwendung von TPC, hat sich herausgestellt, dass bei einer Temperung bei 140 bis 180 °C, insbesondere bei 150 bis 170 °C, insbesondere wiederum bei 160 °C, das beste Ergebnis erzielt wird. Die Dauer der Temperung beträgt zwischen 4 und 15 Stunden, abhängig von der gesamten Masse bzw. Anzahl der Abwicklungen auf der Anlieferspule. Nach dem Temperprozess ist es vorteilhaft, wenn vor der Weiterverarbeitung der getemperte Heizleiter langsam auf Raumtemperatur abgekühlt, sozusagen konditioniert wird.

Der getemperte Heizleiter wird nun in eine den Grundkörper bildende vulkanisierbare Polymermischung eingebettet, verbunden mit einer anschließenden Vulkanisation des Artikelrohlings.

Als Polymermischung wird zumeist eine vulkanisierbare Kautschukmischung eingesetzt, die wenigstens eine Kautschukkomponente und übliche Mischungsingredienzien umfasst. Die Kautschukkomponenten können hierbei bevorzugt ausgewählt werden aus der Gruppe, enthaltend Ethylen-Propylen-Mischpolymerisat (EPM), Ethylen-Propylen-Dien-Mischpolymerisat (EPDM), Nitrilkautschuk (NBR), (teil)hydrierter Nitrilkautschuk (HNBR), Fluor-Kautschuk (FKM), Chloropren-Kautschuk (CR), natürliches oder synthetisches Polyisopren (NR bzw. IR), Styrol-Butadien-Kautschuk (SBR), Butylkautschuk (IIR), Brombutylkautschuk (BIIR), Chlorbutylkautschuk (CIIR), Butadien-Kautschuk (BR), Chloriertes Polyethylen (CM), Chlorsulfoniertes Polyethylen (CSM), Polyepichlorhydrin (ECO), Ethylen-Vinylacetat-Kautschuk (EVA), Acrylat-Kautschuk (ACM), Ethylen-Acrylat-Kautschuk (AEM), Siliconkautschuk (MQ, VMQ, PVMQ, FVMQ), Fluorierter Methylsiliconkautschuk (MFQ), Perfluorinierter Propylen-Kautschuk (FFPM), Perfluorcarbon-Kautschuk (FFKM) und Polyurethan (PU).

Besonders vorteilhaft sind insbesondere EPM, EPDM, HNBR, CR, NR, BR, ACM, AEM oder FKM.

Alle genannten Kautschukkomponenten können hierbei alleine oder im Verschnitt eingesetzt werden.

Die üblichen Mischungsingredienzien umfassen wenigstens einen Vernetzer oder ein Vernetzersystem (Vernetzungsmittel und Beschleuniger). Weitere Mischungsingredienzien sind zumeist noch ein Füllstoff und/oder ein Verarbeitungshilfsmittel und/oder ein Weichmacher und/oder ein Alterungsschutzmittel sowie gegebenenfalls weitere Zusatzstoffe (z.B. Farbpigmente). Diesbezüglich wird auf den allgemeinen Stand der Kautschukmischungstechnologie verwiesen.

Zumeist wird in den elastischen Grundkörper, insbesondere bei Schläuchen, ein Festigkeitsträger, der ein- oder mehrlagig ausgebildet sein kann, eingebettet. Bei Schläuchen wird der wendelförmig verlaufende Heizleiter oberhalb des Festigkeitsträgers in die Außenschicht eingebaut.

Die Erfindung wird nun anhand von Ausführungsbeispielen unter Bezugnahme auf schematische Zeichnungen erläutert. Es zeigen:
- Fig. 1: den Querschnitt eines Heizleiters, umfassend eine Seele und eine Ummantelung;
- Fig. 2: einen Schlauch mit einem eingebetteten textilen Festigkeitsträger in Kreuzlagenanordnung;
- Fig. 3: einen Schlauch mit einem eingebetteten wie auch durch die Außenschicht herausgezogenen Heizleiter.

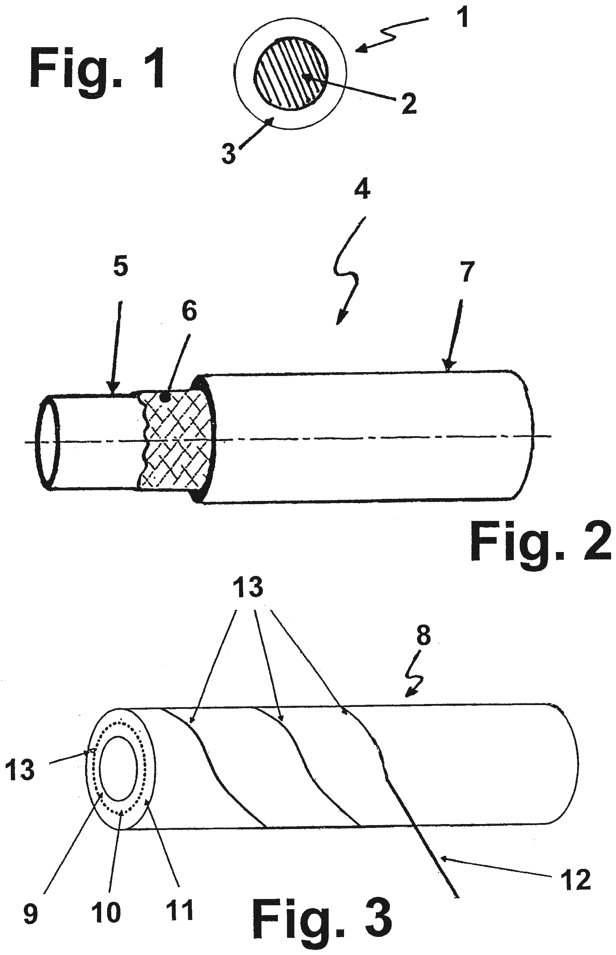

Nach Fig. 1 umfasst der Heizleiter 1 eine Seele 2 aus Metall als Heizdraht und eine Ummantelung 3 als Isolierschicht, insbesondere auf der Basis eines TPC-ES, wobei die Ummantelung einer Temperung unterzogen wird. Der getemperte Heizleiter wird dann in den Schlauch eingebaut.

Nach Fig. 2 besteht der Schlauch 4 aus einer Innenschicht 5 und Außenschicht 7 aus einer vulkanisierten Kautschukmischung, beispielsweise auf der Basis von EPDM. Zwischen der Innenschicht und der Außenschicht ist ein textiler Festigkeitsträger 6 eingebettet. Dieser Festigkeitsträger ist beispielsweise aus Zwirnfäden gebildet, und zwar bei einer Kreuzlagenanordnung. Es liegt hier somit eine geflechtsartige Verstärkungsschicht vor. Innerhalb der Außenschicht 7 und unmittelbar oberhalb des Festigkeitsträgers 6 ist nun der getemperte Heizleiter (Fig. 1) eingebaut, was in Verbindung mit Fig. 3 nun näher erläutert wird.

Nach Fig. 3 umfasst der beheizbare Schlauch 8 eine Innenschicht 9, einen eingebetteten Festigkeitsträger 10 und eine Außenschicht 11. In die Außenschicht ist der getemperte Heizleiter 12 wendelförmig eingebaut, der mittels der Trennfuge 13 freigelegt werden kann, und zwar für die elektrische Verbindung mit der elektrischen Anschlussvorrichtung.

Der beheizbare Schlauch findet insbesondere als Chemikalienschlauch oder als Druckschlauch für Kraftfahrzeuge, insbesondere wiederum im LKW-Bereich, Anwendung.

### Bezugszeichenliste

### (Teil der Beschreibung)

- 1: Heizleiter
- 2: Seele des Heizleiters
- 3: Ummantelung des Heizleiters
- 4: Schlauch
- 5: Innenschicht
- 6: Festigkeitsträger
- 7: Außenschicht
- 8: Schlauch
- 9: Innenschicht
- 10: Festigkeitsträger
- 11: Außenschicht
- 12: Heizleiter
- 13: Trennfuge

## Patentansprüche

1. Beheizbarer Artikel mit einem elastischen Grundkörper aus einem Vulkanisat, wobei in den Grundkörper ein Heizleiter (1, 12) eingebettet ist, der mit einer elektrischen Anschlussvorrichtung elektrisch verbindbar ist sowie eine Seele (2) als Heizdraht und eine Ummantelung (3) aus einem elektrisch isolierenden polymeren Werkstoff umfasst, **dadurch gekennzeichnet, dass** die Ummantelung (3) aus wenigstens einem getemperten thermoplastischen Elastomer besteht.

2. Beheizbarer Artikel nach Anspruch 1, **dadurch gekennzeichnet, dass** die Ummantelung (3) vollständig aus einem thermoplastischen Elastomer besteht.

3. Beheizbarer Artikel nach Anspruch 1 oder 2, **dadurch gekennzeichnet, dass** das thermoplastische Elastomer ein TPC ist.

4. Beheizbarer Artikel nach einem der Ansprüche 1 bis 3, **dadurch gekennzeichnet, dass** das thermoplastische Elastomer bei 140 bis 180 °C getempert ist.

5. Beheizbarer Artikel nach einem der Ansprüche 1 bis 4, **dadurch gekennzeichnet, dass** der Artikel ein Schlauch (4, 8) ist.

6. Beheizbarer Artikel nach Anspruch 5, **dadurch gekennzeichnet, dass** der Artikel ein Chemikalienschlauch oder ein Druckschlauch für Kraftfahrzeuge ist.

7. Verfahren zur Herstellung eines beheizbaren Artikels mit einem elastischen Grundkörper aus einem Vulkanisat, wobei in den Grundkörper ein Heizleiter (1, 12) eingebettet ist, der mit einer elektrischen Anschlussvorrichtung elektrisch verbindbar ist sowie eine Seele (2) als Heizdraht und eine Ummantelung (3) aus einem elektrisch isolierenden polymeren Werkstoff umfasst, **gekennzeichnet durch** wenigstens folgende Verfahrensschritte:
- die Ummantelung (3) des Heizleiters (1, 12), die aus wenigstens einem thermoplastischen Elastomer besteht, wird getempert;
- der getemperte Heizleiter (1, 12) wird in eine den Grundkörper bildende vulkanisierbare Polymermischung eingebettet, und zwar unter Ausbildung eines Artikelrohlings;
- schließlich wird der Artikelrohling vulkanisiert.

8. Verfahren nach Anspruch 7, **dadurch gekennzeichnet, dass** als thermoplastisches Elastomer TPC verwendet wird.

9. Verfahren nach einem der Ansprüche 7 bis 8, **dadurch gekennzeichnet, dass** die Temperung der Ummantelung (3) bei 140 bis 180 °C durchgeführt wird.

10. Verfahren nach einem der Ansprüche 7 bis 9, **dadurch gekennzeichnet, dass** der Heizleiter (1) nach der Temperung der Ummantelung (3) vor der Weiterverarbeitung langsam auf Raumtemperatur abgekühlt wird.

## Claims

1. Heatable product with a resilient main body made of a vulcanizate, where embedded into the main body there is a heating conductor (1, 12) which can be connected electrically to an electrical connection device, and which comprises a core (2) in the form of heating wire and a jacket (3) made of an electrically insulating polymeric material, **characterized in that** the jacket (3) is composed of at least one heat-conditioned thermoplastic elastomer.

2. Heatable product according to Claim 1, **characterized in that** the jacket (3) is composed entirely of a thermoplastic elastomer.

3. Heatable product according to Claim 1 or 2, **characterized in that** the thermoplastic elastomer is a TPC.

4. Heatable product according to any of Claims 1 to 3, **characterized in that** the thermoplastic elastomer has been heat-conditioned at from 140 to 180°C.

5. Heatable product according to any of Claims 1 to 4, **characterized in that** the product is a hose (4, 8).

6. Heatable product according to Claim 5, **characterized in that the product is a chemicals hose** or a pressure hose for motor vehicles.

7. Process for the production of a heatable product with a resilient main body made of a vulcanizate, where embedded into the main body there is a heating conductor (1, 12) which can be connected electrically to an electrical connection device, and which comprises a core (2) in the form of heating wire and a jacket (3) made of an electrically insulating polymeric material, **characterized by** at least the following steps:
- the jacket (3) of the heating conductor (1, 12), said jacket being composed of at least one thermoplastic elastomer, is heat-conditioned;
- the heat-conditioned heating conductor (1, 12) is embedded into a vulcanizable polymer mixture that forms the main body, thus specifically forming a preform of the product;
- finally the preform of the product is vulcanized.

8. Process according to Claim 7, **characterized in that** TPC is used as thermoplastic elastomer.

9. Process according to Claim 7 or 8, **characterized in that** the heat-conditioning of the jacket (3) is carried out at from 140 to 180°C.

10. Process according to any of Claims 7 to 9, **characterized in that,** after the heat-conditioning of the jacket (3), the heating conductor (1) is slowly cooled to room temperature before further processing.

## Revendications

1. Article chauffant comprenant un corps de base élastique en un vulcanisat, un conducteur chauffant (1, 12) étant incorporé dans le corps de base, qui peut être raccordé électriquement avec un dispositif de connexion électrique et comprend une âme (2) en tant que fil chauffant et un gainage (3) en un matériau polymère électriquement isolant, **caractérisé en ce que** le gainage (3) est constitué d'au moins un élastomère thermoplastique recuit.

2. Article chauffant selon la revendication 1, **caractérisé en ce que** le gainage (3) est entièrement constitué d'un élastomère thermoplastique.

3. Article chauffant selon la revendication 1 ou 2, **caractérisé en ce que** l'élastomère thermoplastique est un TPC.

4. Article chauffant selon l'une quelconque des revendications 1 à 3, **caractérisé en ce que** l'élastomère thermoplastique est recuit à une température de 140 à 180 °C.

5. Article chauffant selon l'une quelconque des revendications 1 à 4, **caractérisé en ce que** l'article est un tuyau (4, 8).

6. Article chauffant selon la revendication 5, **caractérisé en ce que** l'article est un tuyau de produits chimiques ou un tuyau sous pression pour véhicules à moteur.

7. Procédé de fabrication d'un article chauffant comprenant un corps de base élastique en un vulcanisat, un conducteur chauffant (1, 12) étant incorporé dans le corps de base, qui peut être raccordé électriquement avec un dispositif de connexion électrique, et comprend une âme (2) en tant que fil chauffant et un gainage (3) en un matériau polymère électriquement isolant, **caractérisé par** au moins les étapes de procédé suivantes :
- le gainage (3) du conducteur chauffant (1, 12), qui est constitué d'au moins un élastomère thermoplastique, est recuit ;
- le conducteur chauffant recuit (1, 12) est incorporé dans un mélange de polymères vulcanisable formant le corps de base, et ce avec formation d'une ébauche d'article ;
- l'ébauche d'article est enfin vulcanisée.

8. Procédé selon la revendication 7, **caractérisé en ce qu'**un TPC est utilisé en tant qu'élastomère thermoplastique.

9. Procédé selon l'une quelconque des revendications 7 à 8, **caractérisé en ce que** le recuit du gainage (3) est réalisé à une température de 140 à 180 °C.

10. Procédé selon l'une quelconque des revendications 7 à 9, **caractérisé en ce qu'**après le recuit du gainage (3), le conducteur chauffant (1) est refroidi lentement à température ambiante avant la transformation ultérieure.
